# EUROPÄISCHE PATENTSCHRIFT

(11) **EP 0 668 881 B1**
(45) Veröffentlichungstag und Bekanntmachung des Hinweises auf die Patenterteilung: **11.08.1999**
(21) Anmeldenummer: 93924563.5
(22) Anmeldetag: 02.11.1993
(51) Int. Cl.: C08G 18/08, C08G 18/32, C08G 18/66, C08G 18/12, C09D 175/04

(54) **POLYURETHAN-DISPERSIONEN UND IHRE VERWENDUNG ALS BINDEMITTEL IN EINBRENNLACKEN**
POLYURETHANE DISPERSIONS AND THEIR USE AS BINDERS IN STOVING PAINTS
DISPERSIONS POLYURETHANE ET LEUR UTILISATION COMME LIANTS DANS DES PEINTURES DURCISSANT PAR CUISSON

(30) Priorität: 11.11.1992 DE 4237965
(43) Veröffentlichungstag der Anmeldung: 30.08.1995
(73) Patentinhaber: Henkel Kommanditgesellschaft auf Aktien, 40191 Düsseldorf (DE)
(72) Erfinder: EICKEN, Ulrich, D-41352 Korschenbroich (DE); WESTFECHTEL, Alfred, D-40723 Hilden (DE); HÖFER, Rainer, D-40477 Düsseldorf (DE); GRÜTZMACHER, Roland, D-42489 Wülfrath (DE)
(86) Internationale Anmeldenummer: EP9303045
(87) Internationale Veröffentlichungsnummer: WO9411413

(56) Entgegenhaltungen:
- EP-A- 0 590 480
- FR-A- 1 386 762
- DATABASE WPI Week 9204, Derwent Publications Ltd., London, GB; AN 92029831 & JP,A,3 277 680 (ARAKAWA) 9. Dezember 1991

## Beschreibung

Gegenstand der vorliegenden Anmeldung sind wäßrige Polyurethan - Dispersionen hergestellt durch Umsetzung von Di- und/oder Polyisocyanaten mit Dimerdiol enthaltenden Polyolmischungen, Kettenverlängerungsmitteln sowie mit Aminoalkoholen mit mindestens 2 Hydroxylgruppen und anschließender Dispergierung in Wasser, ein Verfahren zu ihrer Herstellung und deren Verwendung in Einbrennlacken.

Wäßrige Polyurethan - Dispersionen gewinnen zunehmend an technischer und wirtschaftlicher Bedeutung, da sie toxikologisch und ökologisch verträglicher sind als Polyurethane in organischen Lösemitteln. Prinzipiell lassen sich die meisten Polyurethane unter Zuhilfenahme externer Emulgatoren und großer Scherkräfte in wäßrige Emulsionen und Dispersionen überführen. Die Stabilität dieser Systeme ist aber äußerst gering. Aus diesem Grund ist man dazu übergegangen, selbstemulgierbare Polyurethane zu entwickeln, die ohne Einwirkung externer Emulgatoren und ohne Einwirkung hoher Scherkräfte in Wasser spontan stabile Dispersionen bilden. Derartige selbstemulgierende Polyurethane enthalten im Polyurethan eingebaut Verbindungen, die eine anionische, kationische oder in anionische und kationische überführbare Gruppen enthalten. Ein Beispiel für eine derartige Verbindung ist Dimethylolpropionsäure, die über die Hydroxylgruppen in das Polyurethan eingebaut wird. Die Carboxylgruppe bewirkt nach Überführung in das Carboxylat- Anion die Dispergierung des Polyurethans in Wasser.

So ist beispielsweise aus der europäischen Offenlegungsschrift EP-A-299148 ein selbstemulgierendes Polyesterurethan bekannt, daß durch Umsetzung eines mit Hydroxylgruppen terminierten Polyesters und Dimethyolpropionsäure mit Polyisocyanten hergestellt worden ist. Derartige Polyesterurethane sind zweifelsfrei selbstemulgierbar. Aufgrund des hydrolyseanfälligen, eingebauten Polyesters - Segments zeigen aber solche Polyesterurethane Hydrolyseerscheinungen, wodurch dann die gesamte Dispersion instabil wird. Weniger anfällig gegen Hydrolyse sind Polyetherurethane mit eingebauten Polyether - Segmenten wie Polyethylenglykole, Polypropylenglykole, Polytetrahydrofurane etc. Für einige Anwendungsgebiete sind aber selbstemulgierbare Polyurethane notwendig, die hydrophobere Eingenschaften besitzen als die genannten Polyetherurethane. So werden insbesondere auf dem Gebiet der Beschichtungen hydrophobere Polyurethane benötigt, damit die Beschichtungen die zu beschichtenden Systeme zuverlässig vor Wasser schützen. Aus diesem Grund hat es nicht an Versuchen gemangelt, in Wasser selbstemulgierende Polyurethane mit hydrophoben Segmenten zur Verfügung zu stellen.

In der deutschen Offenlegungsschrift DE-A-3939566 wird deshalb vorgeschlagen, Polyurethane mit Alkoxysilangruppen zu terminieren. So zeigen gemäß dieser Offenlegungsschrift Steine, die mit alkoxysilanterminierten Polyurethanen, ggf. in Form ihrer wäßrigen Dispersion, behandelt worden sind, deutlich reduzierte Wasserdampfdurchlässigkeit. Diese alkoxysilanterminierten Polyurethane werden erhalten durch eine zweistufige Umsetzung. In der ersten Stufe werden Polyisocyanate mit Polyethylenglykolen, die mit hydrophoben Di- und/oder Polyolen und Trimethylolpropan abgemischt sein können, und mit Dimethylolcarbonsäuren zu Polyurethan-Präpolymeren, die noch freie Isocyanatgruppen tragen, umgesetzt. Die Polyurethan-Präpolymeren werden anschließend mit Alkoxysilanen umgesetzt. Als Beispiele für hydrohobe Diole werden Dimerdiole, ringgeöffnete epoxidierte Fette und Öle, Fettsäureethanolamide, Monoglyceride von Fettsäuren, Polypropylenglykole und/oder Polysiloxane angegeben. Diese alkoxysilanterminierten Polyurethane können jedoch nur bis zu einem Polyurethan-Festkörpergehalt bis 12 Gew.-% stabile wäßrige Dispersionen bilden. Von der Praxis werden aber verstärkt Dispersionen mit höheren Polyurethangehalten gefordert.

Des weiteren ist aus dem Stand der Technik bekannt, Polybutadienpolyole in selbstemulgierenden Polyurethanen einzubauen, um zu hydrohoberen Polyurethanen zu gelangen. Polybutadiendiole sind aber aufgrund ihres hohen Anteils an ungesättigten Doppelbindungen äußerst oxidationsempfindlich. Zudem weisen sie als Rohstoff einen unangenehmen Geruch auf. Die hydrierten Vertreter der Polybutadiendiole weisen zwar diese Nachteile nicht auf, sind aber fest, so daß sie für die Polyurethan-Herstellung aufgeschmolzen werden müssen. Des weiteren zeigen wäßrige Polyurethan - Dispersionen mit solchen hydrierten Polybutadiendiolen eine unerwünschte Neigung zur Kristallisation, wodurch die Stabilität der Dispersion verringert wird.

Aufgabe der vorliegenden Erfindung war es, wäßrige Polyurethan - Dispersionen mit selbstemulgierenden Polyurethanen zur Verfügung zu stellen, die hydrophobe Segmente im Polyurethan enthalten. Des weiteren sollten die Polyurethane weitgehend stabil sein gegen Hydrolyse, aber auch gegen Kristallisation. Zudem sollten die Polyurethane auch in höheren Festkörpergehalten stabile Dispersionen bilden.

Diese Aufgabe wurde gelöst durch wäßrige Polyurethan-Dispersionen hergestellt in mehreren Stufen indem man
A) aliphatische und/oder aromatische Di- und/oder Triisocyanate mit
B1) Dimerdiole enthaltenden Polyolmischungen aus
   25 bis 100 Gew.-% Dimerdiolen erhältlich durch Dimerisierung von ein oder mehreren ein- und/oder mehrfach ungesättigten Fettsäuren und/oder deren Estern, wobei die zugrunde liegenden Fettsäuren ausgewählt sind aus der Gruppe Ölsäure, Linolsäure, Linolensäure, Palmitoleinsäure, Elaidinsäure und Erucasäure, nebst anschließender Hydrierung der Säure- bzw. Esterfunktionen der erhaltenen Zwischenprodukte zu den Alkoholfunktionen, wobei die Hydrierung gewünschtenfalls auch in der Weise geführt werden kann, daß auch die in den Zwischenprodukten enthaltenen C=C-Doppelbindungen ganz oder teilweise hydriert werden
   und 0 bis 75 Gew.-% anderen Di- und/oder Polyolen, mit einer Wasserlöslichkeit
   bei 20 °C unterhalb von 300 g/l mit einem
   OH/NCO-Äquivalentverhältnis zwischen 1:1,1 bis 1:4 umsetzt, wobei man diese anderen Di- und/oder Polyole auswählt aus der Gruppe der Polypropylenglykole, Polytetrahydrofurane, Polycaprolactone und/oder Hydroxylgruppen-terminierte Polyester auf Basis der Dicarbonsäuren Adipin-, Phthal-, Malein-, Acelain- und Dimerfettsäuren und den Diolen Ethylenglykol, Propylenglykol, Neopentylglykol, 1,6-Hexandiol und 1,4-Butandiol, wobei die Polyester Hydroxylzahlen gemäß DIN 53240 von 5 bis 600 aufweisen.
   und gleichzeitig oder anschließend mit
B2) Kettenverlängerungsmitteln mit zwei endständigen, gegenüber NCO-Gruppen reaktiven Gruppen, wobei die Kettenverlängerungsmittel zusätzlich entweder anionische oder kationische Gruppen oder durch Neutralisation in anionische oder kationische überführbare Gruppen tragen, in einem Äquivalentverhältnis von gegenüber NCO-Gruppen reaktiven Gruppen zu nach Umsetzung von A) mit B1) theoretisch noch vorhandenen NCO-Gruppen zwischen 1:1,05 bis 1:4 umsetzt und anschließend
C) die nach Umsetzung von A) mit B1) und B2) theoretisch noch
   vorhandenen NCO-Gruppen der Polyurethane mit Aminoalkoholen mit mindestens 2 Hydroxylgruppen in einem Äquivalentverhältnis von Aminogruppen/NCO von mindestens 3:1 umsetzt, und abschließend
   die so erhaltenen Polyurethane in Wasser dispergiert, wobei vor oder während der Dispergierung die erhaltenen Polyurethane zumindest teilweise neutralisiert wurden, wenn die Kettenverlängerungsmittel B2) als zusätzliche Gruppen solche tragen, die erst durch Neutralisation in anionische oder kationische Gruppen überführt werden.

Die erfindungsgemäßen Polyurethan-Dispersionen werden hergestellt, indem zuerst die Polyurethane durch Umsetzung von Di- oder Triisocyanaten (A) mit Dimerdiol enthaltenden Polyolmischungen (B1) und Kettenverlängerungsmitteln (B2) sowie mit Aminoalkoholen mit mindestens 2 Hydroxylgruppen (C) hergestellt werden. Die Polyurethane werden anschließend in Wasser auf übliche Weise dispergiert.

Zur Herstellung der Polyurethane werden übliche aliphatische und/oder aromatische Di- und/oder Triisocyanate umgesetzt, die im Durchschnitt 2 oder 3 Isocyanatgruppen aufweisen. Bevorzugt werden Diisocyanate Q (NCO)₂ eingesetzt, wobei Q einen aliphatischen Kohlenwasserstoffrest mit 4 bis 12 Kohlenstoffatomen, einen cycloaliphatischen Kohlenwasserstoffrest mit 6 bis 15 Kohlensotffatomen, einen aromatischen Kohlenwasserstoffrest mit 6 bis 15 Kohlenstoffatomen oder ein araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 1-Isocyanato-3,3,5-trimethyl-5-isocyanatomethylcyclohexan, 4,4'-Diisocyanatodicyclohexylmethyl, 4,4'-Diisocyanatodicyclohexylpropan (2,2), 1,4-Diisocyanatobenzol, 2,4-Diisocyanatotoluol, 2,6-Diisocyanatotoluol, 4,4'-Diisocyanatodiphenylmethan, p-Xylylendiisocyanat sowie aus diesen Verbindungen bestehende Gemische. Besonders bevorzugt werden aliphatische Diisocyanate und insbesondere Isophorondiisocyanat.

Es ist selbstverständlich auch möglich, die in der Polyurethanchemie an sich bekannten Triisocyanate, die auch modifiziert sein können, beispielsweise mit Carbodiimidgruppen, Allophtanatgruppen, Isocyanuratgruppen, Urethangruppen und/oder Biuretgruppen, anteilig mit zu verwenden.

Die Polyolmischungen (B1) können zu 100 Gew.-% aus Dimerdiolen bestehen oder enthalten zumindest 25 Gew.-% - bezogen auf Polyolmischung - Dimerdiole. Der Anteil von 25 Gew.-% an Dimerdiolen ist notwendig, damit die Polyurethane die gewünschten hydrophoberen Eigenschaften aufweisen. Dimerdiole sind an und für sich bekannte Verbindungen, die durch Hydrierung von dimeren Fettsäuren und/oder deren Estern gemäß der deutschen Auslegeschrift DE-B-17 68 313 hergestellt werden können. Als Edukte eignen sich hier Dimerisationsprodukte von ein- und/oder mehrfach ungesättigten Fettsäuren und/oder deren Estern, beispielsweise Dimerisationsprodukte von Ölsäure, Linolsäure, Linolensäure, Palmitoleinsäure, Elaidinsäure und/oder Erucasäure und/oder deren Ester. Besonders bevorzugt werden als Edukte Dimerisierungsprodukte von ein- oder mehrfach ungesättigten Fettsäuremischungen wie sie bei der Spaltung von natürlichen Fetten und/oder Ölen, beispielsweise von Olivenöl, Sonnenblumenöl, Sojaöl, Baumwollsaatöl und/ oder Tallöl anfallen. In Abhängigkeit von den gewählten Reaktionsbedingungen der an sich bekannten Dimerisierungen können neben Dimerfettsäuren auch wechselnde Mengen an oligomeren Fettsäuren und/oder Restmengen an monomeren Fettsäuren bzw. deren Estern vorliegen. Enthalten die dimerisierten Fettsäuren bzw. Fettsäureester größere Mengen monomerer Fettsäuren bzw. Fettsäureester, so kann es zweckmäßig sein, diese nach oder vor der Hydrierung zu den Dimerdiolen destillativ abzutrennen, vorzugsweise als Fettsäureester von niederen Alkoholen mit 1 bis 4 C-Atomen. Die Hydrierungen der dimerisierten Fettsäuren bzw. deren Estern können gemäß der deutschen Auslegeschrift DE-B-17 68 313 in Gegenwart von kupfer- und/oder zinkhaltigen Katalysatoren in üblichen kontinuierlich arbeitenden Druckhydrierapparaturen mit Gaskreislauf durchgeführt werden. Unter diesen Umständen werden nicht nur die Carboxylgruppen der Fettsäuren zu Hydroxylgruppen hydriert, sondern auch gegebenenfalls noch in den dimerisierten Fettsäuren bzw. deren Estern enthaltene Doppelbindungen zum Teil oder vollständig hydriert. Es ist aber auch möglich, die Hydrierung so durchzuführen, daß die Doppelbindungen während der Hydrierung vollständig erhalten bleiben. In diesem Fall fallen ungesättigte Dimerdiole gegebenenfalls in Mischung mit Trimertriolen und Restmonomeren an. Bevorzugt wird die Hydrierung jedoch so durchgeführt, daß die Doppelbindungen zumindest teilweise oder vollständig hydriert werden. Eine weitere Möglichkeit zur Herstellung von vollständig gesättigten Dimerdiolen besteht darin, gesättigte Dimerfettsäuren durch Hydrierung in die entsprechenden gesättigten Dimerdiole zu überführen. Eine andere Möglichkeit zur Herstellung von Dimerdiolen besteht in der Dimerisierung von ungesättigten Alkoholen in Gegenwart von Kieselerde/Tonerde-Katalysatoren und basischer Alkalimetallverbindungen gemäß der internationalen Anmeldung WO 91/13918.

Als ungesättigte Alkohole eignen sich ein- und/oder mehrfach ungesättigte Fettalkohole wie Palmitoleyl-, Oleyl-, Elaidyl-, Linolyl-, Linolenyl- und Erucylalkohol. Nach diesem Verfahren enstehen ungesättigte Dimerdiole, deren Doppelbindungen ggf. anschließend teilweise oder vollständig hydriert werden können.

Unabhängig von den beschriebenen Verfahren zur Herstellung der Dimerdiole werden bevorzugt solche Dimerdiole verwendet, die aus Fettsäuren oder deren Estern bzw. Fettalkoholen mit 18 C-Atomen hergestellt worden sind. Auf diese Weise entstehen Dimerdiole mit 36 C-Atomen. Wie bereits geschildert, weisen die Dimerdiole, die nach den oben genannten technischen Verfahren hergestellt worden sind, auch stets wechselnde Mengen an Trimertriolen und Restmonomeren auf. In der Regel liegt dabei der Anteil an Dimerdiolen über 70 Gew.-% und der Rest sind Trimertriole und Monomeralkohole. Im Sinne der Erfindung können sowohl diese Dimerdiole eingesetzt werden als auch reinere Dimerdiole mit über 90 Gew.-% Dimerdiolanteil. Insbesondere bevorzugt werden Dimerdiole mit über 90 bis 99 Gew.-% Dimerdiolanteil, wobei hiervon solche Dimerdiole wiederum bevorzugt sind, deren Doppelbindung zumindest teilweise oder vollständig hydriert sind.

Die Polyolmischungen (B1) können neben Dimerdiolen zu 0 bis 75 Gew.-% andere hydrophobe Di- und/oder Polyole enthalten, vorzugsweise andere hydrophobe Diole. Hydrophobe Di- und/oder Polyole sind im Sinne der Erfindung solche, deren Wasserlöslichkeit bei 20 °C unter 300 g pro Liter Wasser liegt. Als hydrophobe Diole werden Polypropylenglykol, Polytetrahydrofuran, Polycaprolacton und/oder Hydroxylgruppen-terminierte Polyester eingesetzt, wobei die hydrophoben Diole Hydroxylzahlen gemäß DIN 53240 von 5 bis 600, vorzugsweise von 20 bis 300 aufweisen. Die genannten Diole sind handelsübliche Produkte. Die Hydroxylgruppen-terminierte Polyester sind Polyester auf Basis von den Dicarbonsäuren Adipin-, Phthal-, Malein-, Acelain-, und Dimerfettsäuren und den Diolen wie Ethylenglykol, Propylenglykol, Neopentylglykol, 1,6-Hexandiol und 1,4-Butandiol. Besonders bevorzugt werden Dimerdiole enthaltende Polyolmischungen aus 25 bis 100 Gew.-% Dimerdiole mit 36 C-Atomen und 0 bis 75 Gew.-% Polypropylenglykol, Polytetrahydrofuran, Polycaprolactonen und/oder OH-terminierten Polyestern mit Hydroxylzahlen von 5 bis 600, vorzugsweise von 20 bis 300.

Über die Polyolmischung können die Eigenschaften der Polyurethane in beiden Bereichen beeinflußt werden. So werden besonders hydrophobe Polyurethane erhalten durch hohe Anteile an Dimerdiol.

Zur Herstellung der Polyurethane werden die Di- und/oder Triisocyanate mit der Polyolmischung in einem Äquivalentverhältnis von OH/NCO zwischen 1:1,1 bis 1 : 4, vorzugsweise zwischen 1 : 1,3 bis 1 : 1,8 umgesetzt. Die Umsetzung wird so lange geführt, bis alle Hydroxylgruppen der Polyolmischung abreagiert haben und somit im Reaktionsprodukt keine freien Hydroxylgruppen mehr vorhanden sind. Unter diesen Umständen wird ein theoretischer Gehalt an NCO-Gruppen erhalten, der sich errechnet aus der Differenz von eingesetzten NCO-Gruppen der Di-und/oder Triisocyanate und theoretisch mit den Hydroxylgruppen der Polyolmischung abreagierten Isocyanatgruppen. Die theoretische Zahl an NCO-Gruppen ist somit eine errechnete Zahl.

Die Umsetzung der Di- und/oder Triisocyanate mit den Dimerdiolen enthaltenden Polyolmischungen kann in Anwesenheit der Kettenverlängerungsmittel (B2) erfolgen, oder die Kettenverlängerungsmittel werden erst nach Umsetzung der Di- und/oder Triisocyanate mit den Dimerdiolen enthaltenden Polymischungen umgesetzt. Die Kettenverlängerungsmittel enthalten 2 endständige, gegenüber NCO-Gruppen reaktive Gruppen. Als solche reaktiven Gruppen sind solche anzusehen, die einen aktiven Wasserstoff enthalten wie beispielsweise Hydroxylgruppen oder primäre oder sekundäre Amingruppen. Des weiteren enthalten die Kettenverlängerungsmittel zusätzlich anionische oder kationische Gruppen oder durch Neutralisation in anionische oder kationische überführbare Gruppen. Geeignete Kettenverlängerungsmittel sind Dimethylolcarbonsäuren mit 1 bis 6 C-Atomen, Dihydroxyverbindungen mit tertiären Aminstickstoffatomen, Diaminoverbindungen mit tertiärem Aminstickstoffatomen und Umsetzungsprodukte von Diaminen mit Vinylsulfonsäure oder deren Salze. Beispiele für derartige Kettenverlängerungsmittel sind Dimethylolpropionsäure, N-Methyldiethanolamin, N-Methyl-diisopropanolamin, N-Ethyl-diethanolamin, N-Ethyl-diisopropanolamin, N-Methyl-bis-(3-aminopropyl)-amin, N-Methyl-bis(2-aminoethyl)-amin oder N,N',N"-Trimethyl-diethylentriamin. Bei den vorgenannten Verbindungen handelt es sich um Kettenverlängerungsmittel, die zusätzlich solche Gruppen tragen, die erst nach Neutralisation in anionische bzw. kationische Gruppen überführt werden. Die Neutralisation wird zumindest teilweise, vorzugsweise vollständig durchgeführt. Anstelle der aufgeführten Verbindungen können natürlich gleich die Neutralisationsprodukte, d. h. deren Salze, als Kettenverlängerungsmittel in das Polyurethan eingebaut werden.

Das Kettenverlängerungsmittel bewirkt über die zusätzlichen anionischen und/oder kationischen Gruppen die Emulgierbarkeit in Wasser. Von daher werden die Kettenverlängerungsmittel auch oft als sogenannte "innere Emulgatoren" bezeichnet. Die Kettenverlängerungsmittel werden in einer solchen Menge eingesetzt, daß das Äquivalentverhältnis von gegenüber NCO-Gruppen reaktiven Gruppen der Kettenverlängerungsmittel zu nach Umsetzung von A) mit B1) theoretisch noch vorhandenen NCO-Gruppen zwischen 1 : 0,9 bis 1 : 4, vorzugsweise zwischen 1 : 1 bis 1 : 2 liegt. Der Begriff der theoretisch noch vorhandenen NCO Gruppen ist, wie oben definiert, die rechnerisch zu erwartende Differenz von eingebrachten Isocyanatgruppen der Di- oder Triisocyanate minus der mit B1) theoretisch abreagierten Isocyanatgruppen.

Je nach eingesetztem Äquivalentverhältnis von gegenüber NCO-Gruppen reaktiven Gruppen der Kettenverlängerungsmitteln zu den theoretisch noch vorhandenen NCO-Gruppen entstehen Polyurethane, die entweder mit gegenüber NCO-Gruppen reaktiven Gruppen terminiert sind oder die mit NCO-Gruppen terminiert sind. Das Äquivalentverhältnis wird so gewählt, daß die Polyurethane mit NCO-Gruppen terminiert sind. Diese NCO-Gruppen terminierten Polyurethane setzt man dann mit Aminoalkoholen mit mindestens 2 Hydroxylgruppen in einem Äquivalentverhältnis von OH+Aminogruppe/NCO von mindestens 3 : 1 um. Auf die letzte geschilderte Art und Weise werden Polyurethane erhalten, die mit Hydroxylgruppen terminiert sind. Nur derartige Hydroxylgruppen terminierte Polyurethane können als Bindemittel in Einbrennlacken verwendet werden. Als Aminoalkohole mit mindestens 2 Hydroxylgruppen setzt man vorzugsweise Diethanolamin und Tris(hydroxylmethyl)methylamin ein. Besonders bevorzugt werden die Aminoalkohole mit mindestens 2 Hydroxylgruppen in einem Äquivalentverhältnis von OH+Aminogruppen : NCO zwischen 3 : 1 bis 6 : 1 mit noch theoretisch vorhandenen NCO-Gruppen der Polyurethane nach der Umsetzung von A) mit B1) und B2) umgesetzt. Der Ausdruck "OH+Aminogruppe" bedeutet dabei die Äquivalentsumme von vorhandenen Hydroxyl- und primären oder sekundären Aminogruppen. So sind beispielsweise beim Diethanolamin 2 Hydroxylgruppen und eine primäre Aminogruppe mit zwei aktiven Wasserstoffen vorhanden, wovon nur eine mit Isocyanaten abreagiert, d. h. insgesamt liegen drei gegenüber NCO-Gruppen aktive Wasserstoffe vor. Die Äquivalentsumme an OH-Gruppen und Aminogruppen beträgt somit 1/3. Pro einer NCO-Gruppe müßten damit im Sinne der Erfindung mindestens 1 Mol an Diethanolamin eingesetzt werden.

Unabhängig davon, ob die Polyurethane noch mit reaktiven Gruppen terminiert sind, werden sie abschließend auf übliche Weise in Wasser dispergiert. Dabei sollten vor oder spätestens während der Dispergierung die erhaltenen Polyurethane zumindest teilweise, vorzugsweise vollständig, neutralisiert werden, wenn die Kettenverlängerungsmittel B2) solche zusätzlichen Gruppen tragen, die erst durch Neutralisation in anionische oder kationische Gruppen überführt werden müssen. Derartige Kettenverlängerungsmittel sind bereits beschrieben worden. Zur Neutralisation werden entsprechend dem Charakter der Gruppe des Kettenverlängerungsmittels Säuren oder Basen eingesetzt. Als Säuren eignen sich insbesondere die anorganischen Säuren wie Salzsäure, Schwefelsäure, Kohlensäure oder auch organische Säuren wie Essigsäure, Ameisensäure und Milchsäure. Als Basen eignen sich selbstverständlich die Alkalihydroxide, aber auch organische Verbindungen mit einem tertiären Amin wie Dimethylethanolamin, N-Methylmorpholin oder Triethylamin.

Die wäßrigen Polyurethan-Dispersionen können außer Wasser noch ein polares organisches Lösungsmittel wie N-Methylpyrrolidon, Methylethylketon oder Aceton enthalten. Aus toxikologischer und ökologischer Sicht ist es jetzt jedoch von Vorteil, auf diese organischen Lösungsmittel zu verzichten.

Die erfindungsgemäßen wäßrigen Polyurethan-Dispersionen werden hergestellt gemäß Verfahrensanspruch, indem man die aliphatischen und/oder aromatischen Di- und/oder Triisocyanate mit Dimerdiolen enthaltenden Polyolmischungen und Kettenverlängerungsmitteln mit 2 endständigen gegenüber NCO-Gruppen reaktiven Gruppen umsetzt. Die Umsetzung mit den Kettenverlängerungsmitteln kann gleichzeitig erfolgen, oder sich der Umsetzung mit den Dimerdiolen enthaltenden Polyolmischung anschließen. Bevorzugt wird die sogenannte Eintopfreaktion, wobei sowohl die Dimerdiole enthaltenden Polyolmischungen und die Kettenverlängerungsmittel zusammen mit den Di- und/oder Triisocyanaten umgesetzt werden. Dabei ist es zweckmäßig, die Di- und/oder Triisocyanate zu den vorgelegten Dimerdiole enthaltenden Polyolmischungen und gegebenen Kettenverlängerungsmitteln zuzugeben. Die Temperatur der Umsetzung liegt im allgemeinen bei 20 bis 160 °C, vorzugsweise bei 50 bis 120 °C. Die Umsetzung kann in Gegenwart eines organischen, mit Wasser mischbaren gegenüber NCO-Gruppen inerten Lösungsmittels erfolgen. Das Lösungsmittel kann, falls gewünscht, dann destillativ nach Überführung der Polyurethane in die wäßrige Phase entfernt werden. Vorteilhafterweise wird das Polyurethan jedoch ohne Lösungsmittel hergestellt. Die Umsetzungsverhältnisse sind bereits im Vorhergehenden genannt worden. So können nach einer Ausführungsform der vorliegenden Erfindung auf diese Weise NCO-terminierte Polyurethane hergestellt werden, die falls gewünscht, anschließend mit Polyolen mit mindestens 3 Hydroxylgruppen und/oder Aminoalkoholen mit mindestens zwei Hydroxylgruppen umgesetzt werden. Diese Umsetzung mit den Polyolen mit mindestens 3 Hydroxylgruppen wird vorzugsweise bei Temperaturen von 50 bis 120 °C durchgeführt.

Die Überführung der Polyurethane in die wäßrige Phase erfolgt im allgemeinen zwischen 20 und 100 °C. Es wird soviel Wasser verwendet, daß eine 10 bis 50, vorzugsweise 20 bis 50 gew.-%ige Dispersion der Polyurethane erhalten wird. Vor oder spätestens während der Dispergierung der Polyurethane in Wasser erfolgt eine zumindest teilweise Neutralisierung, wenn die Kettenverlängerungsmittel B2) solche zusätzlichen Gruppen tragen, die erst durch Neutralisation in anionische oder kationische Gruppen überführt werden. Die Neutralisation erfolgt bei den gleichen Temperaturen wie die Dispergierung.

Ein weiterer Gegenstand der vorliegenden Erfindung ist die Verwendung der wie oben Beschrieben hergestellten von wäßrigen Polyurethan-Dispersionen als Bindemittel für Einbrennlacke.

Die Kettenverlängerungsmittel werden in einem Äquivalentverhältnis vor gegenüber NCO-Gruppen reaktiven Gruppen zu theoretisch nach Umsetzung vor A) mit B1) noch vorhandenen NCO-Gruppen zwischen 1 : 1,05 bis 1 : 4 eingesetzt, damit die erhaltenen Polyurethane auf jeden Fall noch freie NCO-Gruppen als Terminierung enthalten. Diese NCO-terminierten Polyurethane werden anschließend mit Aminoalkoholen mit mindestens zwei Hydroxylgruppen in dem schon genannten Äquivalentverhältnis umgesetzt, so daß Polyurethane entstehen, die freie Hydroxylgruppen aufweisen. Diese Hydroxylgruppen haltigen Polyurethane werden wie schon beschrieben dispergiert und gegebenenfalls neutralisiert. Solche wäßrigen Dispersionen von Hydroxylgruppen-haltigen Polyurethanen sind geeignet als Bindemittel in Einbrennlacken. Zur Herstellung eines solchen Einbrennlackes kann im einfachsten Fall die wäßrige Dispersion der Hydroxylgruppen-haltigen Polyurethane mit Vernetzungsmitteln versetzt werden. Geeignete Vernetzungsmittel sind Phenol-Formaldehydkondensate, Harnstoff-Formaldehydkondensate, wie ein Methylolgruppen-enthaltendes Harnstoff-Formaldehydharz, und Melamin-Formaldehyd-Kondensate, wie ein Methylolgruppen-enthaltendes Melamin-Formaldehyd-Kondensat. Insbesondere werden Methylolgruppen-enthaltende Melamin-Formaldehyd-Kondensate als Vernetzer für Einbrennlacke bevorzugt. Die Vernetzung selber wird durch Einbrennen der Bindemittel mit den Vernetzungsmitteln erreicht. Falls gewünscht, können auch Bindemittelgemische von wäßrigen Polyurethan-dispersionen und üblichen Bindemitteln eingesetzt werden. Übliche bekannte Bindemittel sind Nitrocellulose, Polyacrylate, Polyesterharze, Epoxidharze, modifizierte Alkydharze, Polyurethane oder Chlorkautschuk.

Falls gewünscht, können die erfindungsgemäßen wäßrigen Polyurethan-Dispersionen als Bindemittel für Einbrennlacke verwendet werden, die außer Vernetzer noch übliche zusätzliche Bestandteile wie Weichmacher, Pigmente, Sikkative und andere Hilfs- und Zusatzstoffe enthalten. Die Menge an den anderen Bestandteilen liegen in den für Einbrennlacken üblichen Bereichen.

Mit Hilfe der erfindungsgemäßen wäßrigen Dispersionen mit Hydroxylgruppen-haltigen Polyurethanen lassen sich Bindemittel herstellen, die in weiten Bereichen variierbar sind, so daß auch den daraus hergestellten Einbrennlacken weit variierbare Eigenschaften verliehen werden können. So ist es mit den erfindungsgemäßen Polyurethanen ohne Probleme möglich, sowohl Einbrennlacke mit hochelastischen und harten oder aber auch mit sehr weichen Filmeigenschaften herzustellen. Diese Variationsbreite kann in einfacher Weise erreicht werden durch die weiteren hydrophoben Di- und Polyole, die in der Dimerdiol enthaltenden Polyolmischung zugegen sind. So führt häufig die Mitverwendung von Hydroxylgruppen-terminierten Polyestern als hydrophobes Diol zu harten Filmen. Polyurethane, die dagegen aus Dimerdiolen und Polytetrahydrofuranen hergestellt worden sind, zeigen eher weiche und elastische Eigenschaften. Allen Einbrennlacken gemeinsam ist, daß sie bei Verwendung der erfindungsgemäßen wäßrigen Polyurethan-Dispersionen schon bei etwa 130 °C eingebrannt werden können, und die enthaltenen Lackfilme sehr gute Eigenschaften im Salzsprüh- und Schwitzwassertest zeigen.

### Beispiele

### A) Herstellung der wäßrigen PUR-Dispersionen

Der NCO-Gehalt wurde bestimmt durch Umsetzung des zu untersuchenden Produkts mit einem Überschuß an n-Butylamin und Rücktitration des nicht umgesetzten Butylamins mit Salzsäure. Über den Verbrauch an n-Butylamin wird der NCO-Gehalt bestimmt.

### Eingesetztes Dimerdiol (Kenndaten):

Hydroxylzahl nach DIN 53240 OHZ = 201; Verseifungszahl nach DIN 53401 VZ = 2,1; Jodzahl nach DGF CV, 11b JZ = 52; Zusammensetzung nach GPC: ca. 95 Gew.-% Dimerdiol mit 36 C-Atomen, ca. 2 Gew.-% Trimertriol mit 54 C-Atomen, Rest Monomer), hergestellt durch Hydrierung von destillierten Estern einer dimerisierten Tallölfettsäure.

### A2)

In einem Dreihalskolben mit Rührer, Innenthermometer, Tropftrichter und Rückflußkühler würden 223,1 g Dimerdiol 27 g Dimethylolpropionsäure und 155,4 g Isophorondiisocyanat in 90,8 g N-Methylpyrrolidon umgesetzt, bis ein NCO-Gehalt von 1,66 Gew.-% erreicht war. Daraufhin wurden zur Neutralisierung 20,2 g N-Methyl-Morpholin zugegeben. Man erhielt eine klare Schmelze. Zur Abreaktion der restlichen NCO-Gruppen wurden 24,2 g Tris(hydroxymethyl)methylamin, gelöst in 660 g entsaltzem Wasser, zu der gerührten Schmelze gegeben. Nach Zugabe von weiteren 750 g entsalztem Wasser erhielt man eine viskose Dispersion mit 30 Gew.-% PUR-Festkörper.

### B) Herstellung von Klarlacken

Aus der erfindungsgemäßen PUR-Dispersion wurde ein Klarlack hergestellt, indem sie mit 7,1 oder 10,3 g Cymel 370^{R} der Fa. Cyanamid (88 gew.-%ige Lösung eines teilweise methyliertem Melamin-Formaldehydharzes) oder Cymel 373^{R} der Fa. Cyanamid (85 gew.-%ige Lösung eines teilweise methyliertem Melamin-Formaldehydharzes) versetzt wurden. Sofern die PUR-Dispersionen der Beispiele A2) nur teilweise neutralisiert worden war, wurde zusätzlich Dimethylethanolamin (DMEA) und ggf. entsalztes Wasser zugegeben. In Tabelle 1 sind die Klarlack-Zusammensetzungen angegeben. Die Angaben sind g-Angaben bezogen auf 100 g PUR-Dispersion nach Beispiel A2). Die Klarlacke wurden auf Tiefziehbleche mit Trockenfilmstärken von 35 µ gerakelt und 20 Minuten bei 130 °C eingebrannt. Die gebrannten Filme wurden untersucht auf ihre Härte, Elastizität und Haftung. Die Härte wurde nach 24 Stunden bestimmt als Pendelhärte nach König (DIN 53157) und wird in Sekunden angegeben. Die Elastizität wurde nach der Methode der Erichsen Tiefung gemäß DIN ISO 1520 bestimmt. Werte über 12 bedeuten, daß der Lack sehr flexibel ist, da der Lack erst reißt, wenn das Blech bei der Prüfung reißt. Die Haftung wurde durch den Gitterschnitt gemäß DIN 53151 geprüft. Der Gitterschnitt wurde zusätzlich anschließend mit einem Klebeband bedeckt und das Klebeband abgezogen. Je mehr Lackpartikel auf dem Klebeband sind, desto schlechter die Haftung. Dieses Verfahren wird mit Zahlen von 0 bis 4 bewertet, wobei hohe Zahlen schlechte Haftung bedeuten.

In Tabelle 1 sind ebenfalls die Ergebnisse dieser Prüfungen zusammengefaßt.

**Tabelle 1:**

| Klarlacke und Testergebnisse | | | | | | | | |
|---|---|---|---|---|---|---|---|---|
| Lack | PUR-Dispersion | Cymel 370^{R} | Cymel 373^{R} | DMEA | Wasser | Pendel-Härte | Erichsen-Tiefung | Gitterschnitt |
| B2 | A2 | 7,1 | - | 0,5 | 12 | 100 | > 12* | 0 |

| | | | | | | | | |
|---|---|---|---|---|---|---|---|---|
| * Blechriß | | | | | | | | |

## Patentansprüche

1. Wäßrige Polyurethan-Dispersionen hergestellt in mehreren Stufen indem man
A) aliphatische und/oder aromatische Di- und/oder Triisocyanate mit
B1) Dimerdiole enthaltenden Polyolmischungen aus
25 bis 100 Gew.-% Dimerdiolen erhältlich durch Dimerisierung von ein oder mehreren ein- und/oder mehrfach ungesättigten Fettsäuren und/oder deren Estern, wobei die zugrunde liegenden Fettsäuren ausgewählt sind aus der Gruppe Ölsäure, Linolsäure, Linolensäure, Palmitoleinsäure, Elaidinsäure und Erucasäure, nebst anschließender Hydrierung der Säure- bzw. Esterfunktionen der erhaltenen Zwischenprodukte zu den Alkoholfunktionen, wobei die Hydrierung gewünschtenfalls auch in der Weise geführt werden kann, daß auch die in den Zwischenprodukten enthaltenen C=C-Doppelbindungen ganz oder teilweise hydriert werden
und 0 bis 75 Gew.-% anderen Di- und/oder Polyolen, mit einer Wasserlöslichkeit
bei 20 °C unterhalb von 300 g/l mit einem
OH/NCO-Äquivalentverhältnis zwischen 1:1,1 bis 1:4 umsetzt, wobei man diese anderen Di- und/oder Polyole auswählt aus der Gruppe der Polypropylenglykole, Polytetrahydrofurane, Polycaprolactone und/oder Hydroxylgruppen-terminierte Polyester auf Basis der Dicarbonsäuren Adipin-, Phthal-, Malein-, Acelain- und Dimerfettsäuren und den Diolen Ethylenglykol, Propylenglykol, Neopentylglykol, 1,6-Hexandiol und 1,4-Butandiol, wobei die Polyester Hydroxylzahlen gemäß DIN 53240 von 5 bis 600 aufweisen.
und gleichzeitig oder anschließend mit
B2) Kettenverlängerungsmitteln mit zwei endständigen, gegenüber NCO-Gruppen reaktiven Gruppen, wobei die Kettenverlängerungsmittel zusätzlich entweder anionische oder kationische Gruppen oder durch Neutralisation in anionische oder kationische überführbare Gruppen tragen, in einem Äquivalentverhältnis von gegenüber NCO-Gruppen reaktiven Gruppen zu nach Umsetzung von A) mit B1) theoretisch noch vorhandenen NCO-Gruppen zwischen 1:1,05 bis 1:4 umsetzt und anschließend
C) die nach Umsetzung von A) mit B1) und B2) theoretisch noch
vorhandenen NCO-Gruppen der Polyurethane mit Aminoalkoholen mit mindestens 2 Hydroxylgruppen in einem Äquivalentverhältnis von Aminogruppen/NCO von mindestens 3:1 umsetzt, und abschließend
die so erhaltenen Polyurethane in Wasser dispergiert, wobei vor oder während der Dispergierung die erhaltenen Polyurethane zumindest teilweise neutralisiert wurden, wenn die Kettenverlängerungsmittel B2) als zusätzliche Gruppen solche tragen, die erst durch Neutralisation in anionische oder kationische Gruppen überführt werden.

2. Zusammensetzung nach Anspruch 1, gekennzeichnet durch Kettenverlängerungsmittel ausgewählt aus der Gruppe Dimethylolcarbonsäuren mit 1 bis 6 C-Atomen, Dihydroxyverbindungen mit tertiären Aminstickstoffatomen, Diaminoverbindungen mit tertiären Aminstickstoffatomen und Umsetzungsprodukten von Diaminen mit Vinylsulfonsäure oder deren Salze.

3. Verwendung der Polyurethan-Dispersionen gemäß den Anspruch 1 oder 2 als Bindemittel für Einbrennlacke.

## Claims

1. Aqueous polyurethane dispersions prepared in several stages by -- reacting
A) aliphatic and/or aromatic di- and/or triisocyanates with
B1) polyol mixtures containing dimer diols of
25 to 100% by weight of dimer diols obtainable by dimerization of one or more mono- and/or polyunsaturated fatty acids and/or esters thereof, the fatty acids being selected from the group consisting of oleic acid, linoleic acid, linolenic acid, palmitoleic acid, elaidic acid and erucic acid, and subsequent hydrogenation of the acid or ester functions of the intermediate products obtained to the alcohol functions, the hydrogenation reaction also being carried out - if desired - by complete or partial hydrogenation of the C=C double bonds present in the intermediate products, and
0 to 75% by weight of other diols and/or polyols with a solubility in water at 20°C below 300 g/l, the equivalent ratio of OH to NCO being 1:1.1 to 1:4 and these other diols and/or polyols being selected from the group consisting of polypropylene glycols, polytetrahydrofurans, polycaprolactones and/or hydroxyl-terminated polyesters based on the dicarboxylic acids adipic, phthalic, maleic, azelaic and dimer fatty acids and the diols ethylene glycol, propylene glycol, neopentyl glycol, hexane-1,6-diol and butane-11,4-diol, the polyesters having hydroxyl values according to DIN 53240 of 5 to 600,
and simultaneously or subsequently with
B2) chain-extending agents containing two terminal NCO-reactive groups, the chain-extending agents additionally containing either anionic or cationic groups or groups convertible into anionic or cationic groups by neutralization,
the equivalent ratio of NCO-reactive groups to NCO groups theoretically still present after the reaction of A) with B1) being 1:1.05 to 1:4,
and then reacting
C) the NCO groups theoretically still present in the polyurethanes after the reaction of A) with B1) and B2) with aminoalcohols containing at least two hydroxyl groups in an equivalent ratio of amino groups to NCO of at least 3:1,
and finally -- dispersing the polyurethanes obtained in water, the polyurethanes obtained being at least partly neutralized before or during dispersion where the chain-extending agents B2) contain as additional groups those groups which are only converted into anionic or cationic groups by neutralization.

2. A composition as claimed in claim 1, characterized by chain-extending agents selected from the group consisting of dimethylol carboxylic acids containing 1 to 6 carbon atoms, dihydroxy compounds containing tertiary amine nitrogen atoms, diamino compounds containing tertiary amine nitrogen atoms and reaction products of diamines with vinyl sulfonic acid or salts thereof.

3. The use of the polyurethane dispersions claimed in claim 1 or 2 as binders for stoving lacquers.

## Revendications

1. Dispersions aqueuses de polyuréthane, préparées en plusieurs étapes, en faisant réagir
A) des di- et/ou des triisocyanates aliphatiques et/ou aromatiques avec
B1) des mélanges de polyols renfermant des diols diméres, constitués de
25 à 100 % en poids de diols diméres, obtenables par dimérisation d'un ou de plusieurs acides gras mono- et/ou polyinsaturés et/ou des esters de ceux-ci, les acides gras de base étant sélectionnés parmi le groupe de l'acide oléique, linoléique, linolénique, palmitoléique, élaïdique et érucique, suivie d'hydrogénation des fonctions acide ou ester des produits intermédiaires obtenus en fonctions alcool, l'hydrogénation étant opérée si on le souhaite également de manière telle que les doubles liaisons C=C contenues dans les produits intermédiaires soient partiellement ou totalement hydrogénées
et 0 à 75 % en poids d'autres di- et/ou polyols présentant une solubilité dans l'eau à 20 °C inférieure à 300 g/l avec un rapport des équivalents OH/NCO compris entre 1:1,1 et 1:4, en sélectionnant ces autres di- et/ou polyols parmi le groupe des polypropyléneglycols, des polytétrahydrofuranes, des polycaprolactones et/ou des polyesters terminés par des groupes hydroxyle à base des acides dicarboxyliques - acides adipique, phtalique, maléique, azélaïque et acide gras dimére, et des diols - éthylèneglycol, propyléneglycol, néopentylglycol, 1,6-hexanediol et 1,4-butanediol, les polyesters possédant un indice d'hydroxyle selon DIN 53240 compris entre 5 et 600, et en même temps ou à la suite avec
B2) des prolongateurs de chaînes comportant deux groupes en fin de chaîne, réactifs vis-à-vis des groupes NCO, les prolongateurs de chaînes portant en plus soit des groupes anioniques ou cationiques, soit des groupes transformables par neutralisation en groupes anioniques ou cationiques, dans un rapport des équivalents entre les groupes réactifs vis-à-vis des groupes NCO et les groupes NCO théoriquement encore présents après la réaction de A) avec B1), se situant entre 1:1,05 et 1:4 et en faisant réagir ensuite
C) les groupes NCO des polyuréthanes, théoriquement encore présents après la réaction de A) avec B1) et B2), avec des amino-alcools comportant au moins 2 groupes hydroxyle, dans un rapport des équivalents des groupes amino/NCO d'au moins 3:1 et pour terminer,
en dispersant les polyuréthanes ainsi obtenus dans de l'eau, les polyuréthanes obtenus ayant été neutralisés au moins partiellement avant ou pendant leur dispersion, si les prolongateurs de chaînes B2) portent comme groupes supplémentaires, des groupes qui ne sont transformés en groupes anioniques ou cationiques que par neutralisation.

2. Composition selon la revendication 1, caractérisée par des prolongateurs de chaînes, sélectionné parmi le groupe des acides diméthylolcarboxyliques comportant 1 à 6 atomes de C, composés dihydroxylés avec des atomes d'azote amino tertiaire, des composés diamino avec des atomes d'azote amino tertiaire et des produits de réaction de diamines avec de l'acide vinylsulfonique ou des sels de celui-ci.

3. Utilisation des dispersions de polyuréthane selon la revendication 1 ou 2. comme liants pour les peintures durcissant par cuisson (peintures au four).
